# DEMANDE DE BREVET EUROPEEN

(11) **EP 3 587 177 A1**
(43) Date de publication de la demande: **01.01.2020**
(21) Numéro de dépôt: 19182409.3
(22) Date de dépôt: 25.06.2019
(51) Int. Cl.: B60N 3/00

(54) **SYSTÈME DE RÉCEPTION D'OBJET DERRIÈRE UN DOSSIER DE SIÈGE DE VÉHICULE AUTOMOBILE**

(30) Priorité: 25.06.2018 FR 1855644
(71) Demandeur: TESCA France, 75008 Paris (FR)
(72) Inventeur: SOY, Albert, 17170 Amer (ES)
(74) Mandataire: Sayettat, Julien Christian

(57) **Abrégé**

L'invention concerne un système (1) comprenant un volet (4) monté mobile sur une tablette (3) de manière à pouvoir passer réversiblement : d'une position de rangement où il est disposé à plat sur ladite tablette, de manière à pouvoir accompagner ladite tablette quand elle est amenée en position de rangement, à une position inclinée d'utilisation, adoptable quand ladite tablette est elle-même en position d'utilisation, où le bord avant (5) dudit volet est en correspondance avec le bord arrière (6) de ladite tablette de manière à définir un premier axe de rotation transversal (7) dudit volet permettant de l'actionner en rotation de sorte que son bord arrière (11) se positionne en-dessous de ladite tablette pour que ledit volet forme un pan incliné de réception d'un objet tel qu'un ordinateur.

## Description

L'invention concerne un système de réception d'objet derrière un dossier de siège de véhicule automobile et un sous-ensemble pour un tel système.

Il est connu de réaliser un système de réception d'objet derrière un dossier de siège de véhicule automobile, ledit système comprenant ledit dossier et une tablette de réception montée mobile par rapport audit dossier de manière à pouvoir passer réversiblement :
- d'une position de rangement, où elle est disposée à plat sur l'envers dudit dossier,
- à une position horizontale d'utilisation.

Un tel agencement permet, pour un passager situé derrière le siège pourvu de la tablette, de disposer d'un plan de réception d'un objet tel qu'un ordinateur.

Cependant, il s'avère que l'utilisation d'un tel objet déposé sur la tablette est peu ergonomique, ceci de par l'éloignement dudit objet de son utilisateur et aussi de par l'horizontalité du plan de réception formé par ladite tablette qui ne permet pas une manipulation aisée dudit objet, notamment de son clavier.

L'invention a pour but de pallier cet inconvénient.

A cet effet, et selon un premier aspect, l'invention propose un système de réception d'objet derrière un dossier de siège de véhicule automobile, ledit système comprenant ledit dossier et une tablette de réception montée mobile par rapport audit dossier de manière à pouvoir passer réversiblement :
- d'une position de rangement, où elle est disposée à plat sur l'envers dudit dossier,
- à une position horizontale d'utilisation,
ledit système comprenant en outre un volet monté mobile sur ladite tablette de manière à pouvoir passer réversiblement :
- d'une position de rangement où il est disposé à plat sur ladite tablette en s'inscrivant sensiblement dans le périmètre de ladite tablette de manière à ne pas former de saillie périphérique, de manière à pouvoir accompagner ladite tablette quand elle est amenée en position de rangement,
- à une position inclinée d'utilisation, adoptable quand ladite tablette est elle-même en position d'utilisation, où le bord avant dudit volet est en correspondance avec le bord arrière de ladite tablette de manière à définir un premier axe de rotation transversal dudit volet permettant de l'actionner en rotation de sorte que son bord arrière se positionne en-dessous de ladite tablette pour que ledit volet forme un pan incliné de réception d'un objet tel qu'un ordinateur.

Dans cette description, les termes de positionnement dans l'espace (haut, bas, transversal, latéral, avant, arrière, dessous,...) sont pris en référence au système disposé dans le véhicule, la tablette et le volet étant tous deux en position d'utilisation.

Avec l'agencement proposé, le volet mis en position d'utilisation permet de disposer d'un pan incliné de réception d'objets situé à proximité immédiate de l'utilisateur, ce qui apporte une grande ergonomie.

L'inclinaison du pan permet notamment une manipulation très aisée d'un clavier d'ordinateur posé sur le volet.

Selon un deuxième aspect, l'invention propose un sous-ensemble pour un tel système.

D'autres particularités et avantages de l'invention apparaîtront dans la description qui suit, faite en référence aux figures jointes, dans lesquelles :

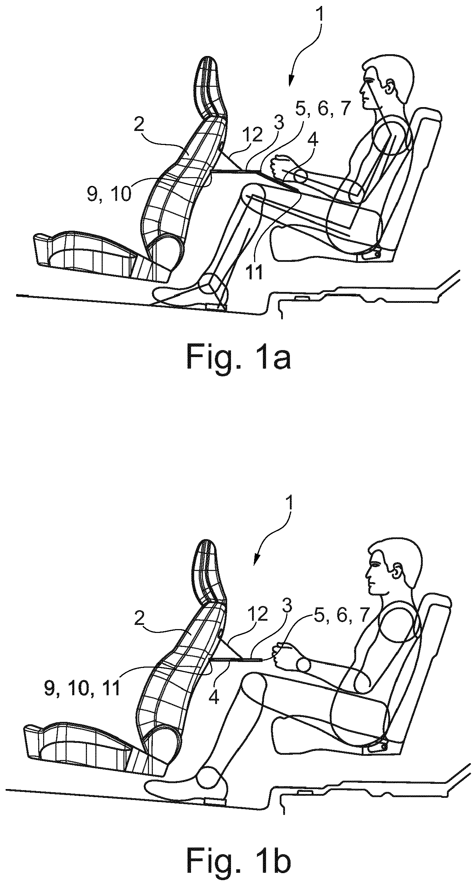

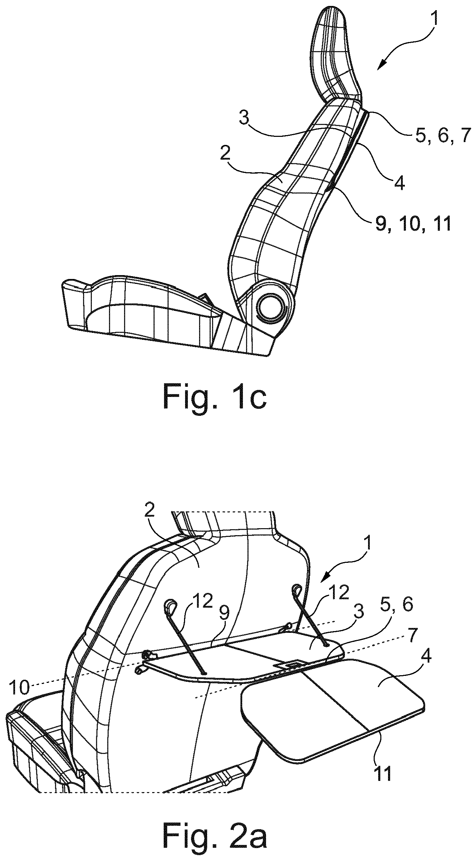

- les figures 1a, 1b et 1c sont des vues latérales schématiques d'un système selon une réalisation, la tablette et le volet étant en position d'utilisation (figure 1a), la tablette étant en position d'utilisation et le volet en position de rangement (figure 1b) et la tablette et le volet étant en position de rangement (figure 1c),

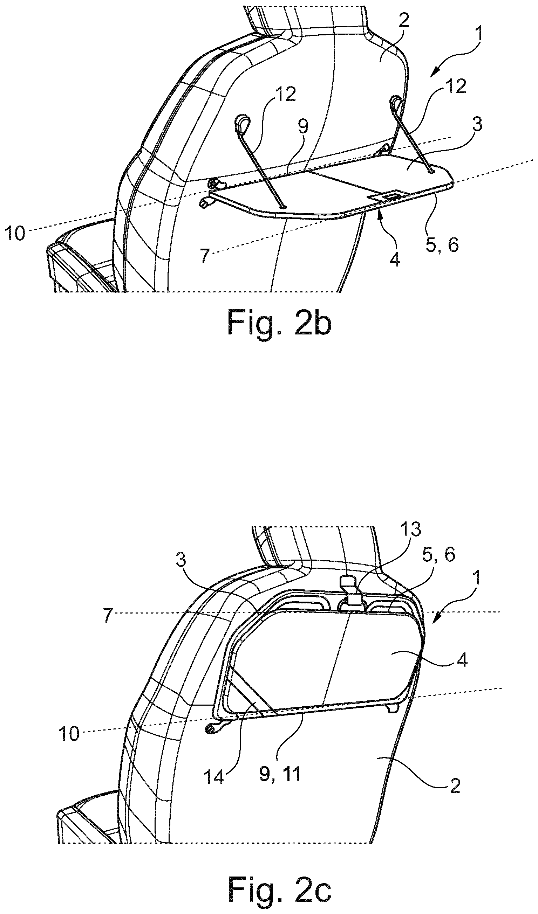

- les figures 2a, 2b, 2c sont des vues en perspective correspondant respectivement aux figures 1a, 1b, 1c.

En référence aux figures, on décrit un système 1 de réception d'objet derrière un dossier 2 de siège de véhicule automobile, ledit système comprenant ledit dossier et une tablette 3 de réception montée mobile par rapport audit dossier de manière à pouvoir passer réversiblement :
- d'une position de rangement, où elle est disposée à plat sur l'envers dudit dossier,
- à une position horizontale d'utilisation,
ledit système comprenant en outre un volet 4 monté mobile sur ladite tablette de manière à pouvoir passer réversiblement :
- d'une position de rangement où il est disposé à plat sur ladite tablette - en l'occurrence sur la face d'envers de ladite tablette dans la réalisation représentée - en s'inscrivant sensiblement dans le périmètre de ladite tablette de manière à ne pas former de saillie périphérique, de manière à pouvoir accompagner ladite tablette quand elle est amenée en position de rangement,
- à une position inclinée d'utilisation, adoptable quand ladite tablette est elle-même en position d'utilisation, où le bord avant 5 dudit volet est en correspondance avec le bord arrière 6 de ladite tablette de manière à définir un premier axe de rotation transversal 7 dudit volet permettant de l'actionner en rotation de sorte que son bord arrière se positionne en-dessous de ladite tablette pour que ledit volet forme un pan incliné de réception d'un objet tel qu'un ordinateur.

Selon la réalisation représentée, la tablette 3 est montée au dossier 2 selon un deuxième axe de rotation transversal 10 s'étendant sensiblement selon son bord avant 9.

Selon la réalisation représentée, la tablette 3 est maintenue en position d'utilisation par deux liens souples 12 reliant les extrémités de son bord arrière 6 au dossier 2.

Selon la réalisation représentée, la tablette 3 effectue une rotation vers le haut pour venir en position de rangement.

Le maintien de la tablette 3 en position de rangement est assuré par un moyen de verrouillage 13, par exemple sous forme de patte prenant appui sur le bord arrière 6 de ladite tablette.

Selon une réalisation non représentée, la tablette 3 est montée au dossier 2 par un premier moyen de rotation/translation agencé pour lui permettre, à partir de sa position d'utilisation :
- de pivoter vers le haut autour de son bord avant 9 pour se mettre en position haute de parallélisme avec l'envers dudit dossier,
- puis de coulisser vers le bas vers sa position de rangement, notamment au moyen de rails de guidage solidaires dudit dossier et recevant en coulissement les bords latéraux de ladite tablette.

Selon la réalisation représentée, le volet 4 est monté en articulation par son bord avant 5 au bord arrière 6 de la tablette 3 selon le premier axe de rotation transversal 7.

Selon la réalisation représentée, le volet 4 effectue une rotation vers le bas pour venir en position de rangement, ce qui fait que la tablette 3 s'interpose entre ledit volet et l'envers du dossier 2 quand elle est mise en position de rangement.

En variante non représentée, le volet 4 effectue une rotation vers le haut pour venir en position de rangement, ledit volet s'interposant alors entre la tablette 3 et l'envers du dossier 2 quand ladite tablette est mise en position de rangement. Selon la réalisation représentée, le maintien du volet 4 en position de rangement est assuré par une sangle élastique 14 fixée sur la tablette 3 et enserrant une zone de coin arrière du volet 4.

Selon une réalisation alternative non représentée, le volet 4 est monté à la tablette 3 par un deuxième moyen de rotation/translation agencé pour lui permettre, à partir de sa position d'utilisation :
- de pivoter vers le haut pour se mettre en position reculée de parallélisme avec ladite tablette,
- puis de coulisser vers l'avant vers sa position de rangement, notamment au moyen de rails de guidage solidaires de ladite tablette et recevant en coulissement les bords latéraux dudit volet, l'extrémité arrière desdits rails étant agencée de manière à permettre la rotation dudit volet quand son bord avant 5 est mis en correspondance avec le bord arrière 6 de ladite tablette.

Selon la réalisation représentée, la plage de rotation du volet 4 est définie de sorte que son bord arrière 11 puisse prendre appui sur les cuisses d'un utilisateur quand il est mis en position d'utilisation.

Selon une variante non représentée, il peut être prévu une butée limitant la rotation du volet 4 de sorte que son bord arrière 11 ne vienne pas en appui sur les cuisses d'un utilisateur quand il est mis en position d'utilisation.

Selon la réalisation représentée, la surface du volet 4 représente au moins 80% de celle de la tablette 3, de sorte que ledit volet offre une étendue permettant le dépôt d'objets de grande taille.

On décrit enfin un sous-ensemble pour un tel système 1, ledit sous-ensemble comprenant :
- une tablette 3 de réception d'objet destinée à être montée mobile par rapport à un dossier 2,
- un volet 4 monté mobile sur ladite tablette de manière à pouvoir passer réversiblement :
   ∘ d'une position de rangement où il est disposé à plat sur ladite tablette en s'inscrivant sensiblement dans le périmètre de ladite tablette de manière à ne pas former de saillie périphérique,
   ∘ à une position inclinée d'utilisation où le bord avant 5 dudit volet est en correspondance avec le bord arrière 6 de ladite tablette de manière à définir un premier axe de rotation transversal 7 dudit volet permettant de l'actionner en rotation de sorte que son bord arrière 11 se positionne en-dessous de ladite tablette.

## Revendications

1. Système (1) de réception d'objet derrière un dossier (2) de siège de véhicule automobile, ledit système comprenant ledit dossier et une tablette (3) de réception montée mobile par rapport audit dossier de manière à pouvoir passer réversiblement :
• d'une position de rangement, où elle est disposée à plat sur l'envers dudit dossier,
• à une position horizontale d'utilisation,
ledit système étant **caractérisé en ce qu'**il comprend en outre un volet (4) monté mobile sur ladite tablette de manière à pouvoir passer réversiblement :
• d'une position de rangement où il est disposé à plat sur ladite tablette en s'inscrivant sensiblement dans le périmètre de ladite tablette de manière à ne pas former de saillie périphérique, de manière à pouvoir accompagner ladite tablette quand elle est amenée en position de rangement,
• à une position inclinée d'utilisation, adoptable quand ladite tablette est elle-même en position d'utilisation, où le bord avant (5) dudit volet est en correspondance avec le bord arrière (6) de ladite tablette de manière à définir un premier axe de rotation transversal (7) dudit volet permettant de l'actionner en rotation de sorte que son bord arrière (11) se positionne en-dessous de ladite tablette pour que ledit volet forme un pan incliné de réception d'un objet tel qu'un ordinateur.

2. Système selon la revendication 1, **caractérisé en ce que** la tablette (3) est montée au dossier (2) selon un deuxième axe de rotation transversal (10) s'étendant sensiblement selon son bord avant (9).

3. Système selon la revendication 1, **caractérisé en ce que** la tablette (3) est montée au dossier (2) par un premier moyen de rotation/translation agencé pour lui permettre, à partir de sa position d'utilisation :
• de pivoter vers le haut autour de son bord avant (9) pour se mettre en position haute de parallélisme avec l'envers dudit dossier,
• puis de coulisser vers le bas vers sa position de rangement.

4. Système selon l'une quelconque des revendications 1 à 3, **caractérisé en ce que** le volet (4) est monté en articulation par son bord avant (5) au bord arrière (6) de la tablette (3) selon le premier axe de rotation transversal (7).

5. Système selon l'une quelconque des revendications 1 à 3, **caractérisé en ce que** le volet (4) est monté à la tablette (3) par un deuxième moyen de rotation/translation agencé pour lui permettre, à partir de sa position d'utilisation :
• de pivoter vers le haut pour se mettre en position reculée de parallélisme avec ladite tablette,
• puis de coulisser vers l'avant vers sa position de rangement.

6. Système selon l'une quelconque des revendications 1 à 5, **caractérisé en ce que** la surface du volet (4) représente au moins 80% de celle de la tablette (3).

7. Système selon l'une quelconque des revendications 1 à 6, **caractérisé en ce que** le volet (4) effectue une rotation vers le bas pour venir en position de rangement, la tablette (3) s'interposant entre ledit volet et l'envers du dossier (2) quand elle est mise en position de rangement.

8. Système selon l'une quelconque des revendications 1 à 6, **caractérisé en ce que** le volet (4) effectue une rotation vers le haut pour venir en position de rangement, ledit volet s'interposant entre la tablette (3) et l'envers du dossier (2) quand ladite tablette est mise en position de rangement.

9. Sous-ensemble pour un système selon l'une quelconque des revendications précédentes, ledit sous-ensemble comprenant :
• une tablette (3) de réception d'objet destinée à être montée mobile par rapport à un dossier (2) en s'inscrivant sensiblement dans le périmètre de ladite tablette de manière à ne pas former de saillie périphérique,
• un volet (4) monté mobile sur ladite tablette de manière à pouvoir passer réversiblement :
∘ d'une position de rangement où il est disposé à plat sur ladite tablette,
∘ à une position inclinée d'utilisation où le bord avant (5) dudit volet est en correspondance avec le bord arrière (6) de ladite tablette de manière à définir un premier axe de rotation transversal (7) dudit volet permettant de l'actionner en rotation de sorte que son bord arrière (11) se positionne en-dessous de ladite tablette.
